# DEMANDE DE BREVET EUROPEEN

(11) **EP 4 686 707 A1**
(43) Date de publication de la demande: **04.02.2026**
(21) Numéro de dépôt: 25188048.0
(22) Date de dépôt: 08.07.2025
(51) Int. Cl.: C03B 40/027

(54) **DISPOSITIF ET PROCÉDÉ D'APPLICATION DE LUBRIFIANT, SUR LES SURFACES INTERNES D'UN MOULE DE FORMAGE DE CORPS CREUX EN VERRE**

(30) Priorité: 30.07.2024 FR 2408449
(71) Demandeur: NOVAXION, 13210 Saint-Rémy-de-Provence (FR)
(72) Inventeur: ECHEVIN, Jean-Baptiste, 13210 Saint-Rémy-de-Provence (FR)
(74) Mandataire: Demulsant, Xavier

(57) **Abrégé**

Dispositif d'application de lubrifiant, sur les surfaces internes d'un moule de formage (1, 10) de corps creux en verre, tels que des bouteilles, le dispositif étant apte à appliquer le lubrifiant sur une partie des surfaces de formage d'un moule principal tel qu'un moule ébaucheur ou un moule finisseur, et sur les surfaces de formage d'un moule de fond situé dans une partie inférieure du moule principal tel qu'un moule de bague ou un moule de fond finisseur, le dispositif comprenant une canne (5) pourvue de premiers trous de pulvérisation (6) et de deuxièmes trous de pulvérisation (7), un ou plusieurs trous parmi les premiers trous pulvérisant un lubrifiant dans une première direction radiale ou axiale, vers le moule ou vers le bas du moule, un ou plusieurs trous parmi les deuxièmes trous pulvérisant un lubrifiant dans une deuxième direction radiale, les premiers trous de pulvérisation et les deuxièmes trous de pulvérisation étant disposés en partie extrême inférieure de la canne, la canne comprenant deux réseaux de distribution de lubrifiant aptes à assurer une alimentation simultanée ou une alimentation séquentielle des premiers trous de pulvérisation et des deuxièmes trous de pulvérisation.

## Description

L'invention a trait au graissage de moules pour l'industrie verrière, et concerne plus particulièrement mais non exclusivement le graissage par pulvérisation de moules finisseurs.

L'invention trouve notamment intérêt dans la fabrication de produits en verre creux, tels que bouteilles, flacons ou pots.

Après fusion, et affinage, le verre subit un conditionnement thermique et est acheminé vers des machines de production dans des chenaux (en anglais *feeders*), pour être découpé en paraisons (en anglais *gob*)*.* Les paraisons sont transformées en pots ou bouteilles par les machines de formage.

Des techniques de fabrication se sont développées en fonction des types de produits à réaliser, notamment le procédé appelé *soufflé-soufflé* (en anglais *blow and blow process*) pour des corps creux à bague étroite tels que des bouteilles pour boisson alimentaire, et le procédé appelé *pressé-soufflé* (en anglais *press and blow process*) pour les corps creux à bague plus large tels que des pots de grande capacité.

On peut se référer par exemple aux documents Biosca et al, Numerical and experimental study of blow and blow for perfume bottles to predict glass thickness and blank mold influence, International Journal of Applied Glass Science, 2019, Vol. 10 Issue 4, p569-583 *;* Doumenc, Coefficients d'échange thermique superficiel : détermination par méthodes inverses en conduction bidimensionnelle transitoire, 1993*.*

On peut se référer également aux documents WO2017032883 (Socabelec, 2017), EP3800166 (Nihon Yamamura Glass, 2021).

Pour le vocabulaire de fabrication des récipients en verre, on peut se référer à la norme ISO7348:1992.

Selon ce vocabulaire normalisé, dans un procédé pressé-soufflé de fabrication de verre creux, l'ébauche et la bague sont pressées, puis l'ébauche est soufflée à la forme finale dans un moule finisseur, l'ébauche étant formée dans un moule ébaucheur. La bague est la partie supérieure d'un col de récipient conçue pour recevoir la fermeture, la bague étant formée par une partie de moule dénommée moule de bague. Selon ce vocabulaire normalisé, dans un procédé soufflé-soufflé, les formes initiale et finale sont obtenues par soufflage d'air sous pression.

Dans un procédé pressé-soufflé, la paraison est introduite dans le moule ébaucheur dont le poinçon vient obstruer l'orifice du moule de bague. Le poinçon est ensuite déplacé vers le haut, obligeant le verre à épouser les contours du moule ébaucheur et du moule de bague. A la fin du pressage, le moule ébaucheur est ouvert et l'ébauche est transférée au moule finisseur, dans lequel est effectué le soufflage. A la fin du soufflage, le moule finisseur est ouvert et la bouteille est démoulée. Dans le procédé soufflé-soufflé, la paraison entre dans le moule ébaucheur, puis de l'air comprimé est injecté et le verre est poussé vers le bas, sur le poinçon et dans le moule de bague. Le poinçon descend, le fond ébaucheur se retire, et de l'air est soufflé à travers la base du poinçon et vient plaquer le verre sur les parois du moule ébaucheur. L'ébauche est ensuite transférée dans le moule finisseur, de l'air comprimé soufflant l'ébauche pour donner la forme définitive du corps creux tel qu'une bouteille.

Ces deux procédés pressé-soufflé, soufflé-soufflé sont le plus souvent mis en œuvre dans des machines IS (*Individual Section, Ingle-Smith*), comprenant plusieurs sections (habituellement jusqu'à 20 sections), chaque section pouvant comporter d'une à quatre empreintes. Chaque empreinte comporte un moule de bague, un moule ébaucheur et un moule finisseur. Une distribution centrale assure la répartition des paraisons vers les différentes sections de la machine de formage IS.

Dans une machine IS conventionnelle, chaque paraison est reçue et traitée dans un moule ébaucheur puis un moule finisseur, le moule ébaucheur comprenant deux demi-moules définissant un plan de joint vertical. A l'extrémité inférieure du moule ébaucheur, les deux demi-moules se referment sur un moule de bague.

Dans des techniques anciennes, la lubrification des surfaces métalliques en contact avec le verre est effectuée manuellement sur les moules, par des opérateurs. Une fine pellicule de lubrifiant, le plus souvent une graisse chargée de graphite, est déposée périodiquement sur les parois de moule ébaucheur, favorisant la pénétration de la paraison dans l'ébaucheur, ainsi que le démoulage de l'ébauche.

La lubrification des surfaces métalliques de moule, dénommée graissage de moule (*swabbing*, *doping*) peut entraîner un marquage ou des taches de graisse sur la surface du produit en verre creux (*carbon mark*), notamment sur la bague ou sur le col.

Le graissage manuel présente de nombreux inconvénients : risque pour l'opérateur qui effectue le graissage sans arrêter la machine, nécessité d'une présence de l'opérateur qui doit effectuer le graissage de manière régulière, par exemple toutes les vingt minutes.

Pour pallier ces problèmes, il est connu d'effectuer le graissage par pulvérisation d'un moule de formage de corps creux en verre, au moyen d'une canne montée mobile par rapport au moule.

Le document WO2007/138226 (Saint-Gobain, 2007) décrit un graissage par pulvérisation d'un moule par une canne en mouvement, portée par un bras d'un robot monté mobile en translation sur un rail longeant le côté moules ébaucheurs d'une machine IS, le graissage des moules finisseurs étant également possible. La canne de pulvérisation effectue un mouvement de descente entre les deux demi-moules d'un moule ébaucheur, avec pulvérisation continue d'huile suivant une direction axiale, selon un cône à 45°, lors de ce mouvement de descente. Lorsque la canne est en position extrême basse, les deux demi-moules sont écartés, laissant le moule de bague apparent, et la canne de pulvérisation est remontée, avec pulvérisation d'huile vers le moule de bague. Puis la pulvérisation est arrêtée et la canne remonte jusqu'en position extrême haute.

Le document WO 2016/132236 (Is Eng, 2016) décrit un graissage par pulvérisation d'un moule ébaucheur ou d'un moule finisseur, par une canne, dans une machine IS. La canne effectue une pulvérisation suivant une direction radiale, en direction des surfaces intérieures des moules, en restant immobile ou en se déplaçant vers le haut ou vers le bas entre les deux demi-moules.

Le document EP3689832 (Nihon Yamamura Glass, 2020) décrit l'application par pulvérisation d'un lubrifiant dans un moule finisseur, par une canne pulvérisant latéralement suivant une direction horizontale, ainsi que vers le bas, suivant une direction verticale. La canne comporte des premiers trous de pulvérisation, à son extrémité inférieure, pour la pulvérisation axiale, par exemple à cône plein, et des seconds trous de pulvérisation, pour la pulvérisation latérale, par exemple à cône plein. Les seconds trous de pulvérisation sont placés en partie intermédiaire de la canne. La pulvérisation latérale est effectuée simultanément à la pulvérisation axiale.

Le document EP4129940 (Emhart Glass, 2023) décrit un graissage par lubrification d'un moule ébaucheur, par une canne effectuant une pulvérisation suivant une direction radiale et axiale, avant ouverture du moule ébaucheur, l'angle de pulvérisation étant compris entre 45 et 90 degrés. La surface supérieure de l'anneau de col ainsi que sa surface interne circonférentielle sont ensuite lubrifiées, après écartement des deux demi moitiés du moule ébaucheur.

Malgré les nombreux développements proposés dans l'art antérieur pour les moyens de graissage par pulvérisation, il est estimé que 2% du rendement des machines de formage de corps creux en verre sont perdus suite à la lubrification des moules (Orzol et al, Tribological investigations of the glass-to-metal contact during glass forming at an industrial scale, International journal of applied glass science, 2021)*.*

L'invention vise à pallier les inconvénients des dispositifs et procédés de l'art antérieur, pour la lubrification par pulvérisation de moules de formage de corps creux en verre.

Il est proposé, selon un premier aspect de l'invention, un dispositif d'application de lubrifiant, sur les surfaces internes d'un moule de formage de corps creux en verre, tels que des bouteilles, le dispositif étant apte à appliquer le lubrifiant sur une partie des surfaces de formage d'un moule principal tel qu'un moule ébaucheur ou un moule finisseur, et sur les surfaces de formage d'un moule de fond situé dans une partie inférieure du moule principal tel qu'un moule de bague ou un moule de fond finisseur, le dispositif comprenant une canne ou lance pourvue de premiers trous de pulvérisation et de deuxièmes trous de pulvérisation, un ou plusieurs trous parmi les premiers trous pulvérisant un lubrifiant dans une première direction radiale ou axiale, vers le moule ou vers le bas du moule, un ou plusieurs trous parmi les deuxièmes trous pulvérisant un lubrifiant dans une deuxième direction radiale, les premiers trous de pulvérisation et les deuxièmes trous de pulvérisation étant disposés en partie extrême inférieure de la canne.

Par disposés en partie extrême inférieure de la canne, on désigne ici le fait que les premiers trous et les deuxièmes trous de pulvérisation sont placés sensiblement à la même hauteur, sur la longueur de la canne, et à proximité de l'extrémité libre inférieure de la canne.

Avantageusement, la canne comprend deux réseaux de distribution de lubrifiant, un premier réseau reliant les premiers trous de pulvérisation à un premier réservoir de lubrifiant, un deuxième réseau reliant les deuxièmes trous de pulvérisation à un deuxième réservoir de lubrifiant ou au premier réservoir de lubrifiant, le dispositif comprenant des moyens de commande de chacun des deux réseaux de distribution, les moyens de commande étant aptes à assurer une alimentation simultanée ou une alimentation séquentielle des premiers trous de pulvérisation et des deuxièmes trous de pulvérisation.

Avantageusement, une mise sous pression de chaque réservoir de lubrifiant permet la circulation de chacun des lubrifiants au travers de conduits distincts, internes à la canne, et une pulvérisation radiale ou axiale d'un premier lubrifiant, simultanée ou non avec une pulvérisation radiale d'un deuxième lubrifiant.

Dans certaines mises en œuvre, les deux réseaux de distribution de lubrifiant distincts sont reliés à un unique réservoir d'un même lubrifiant. Le premier lubrifiant et le deuxième lubrifiant peuvent être identiques ou différents. Les lubrifiants sont par exemple des graisses graphitées pulvérisables, ou des graisses de démoulage sans graphite.

Il est proposé, selon un deuxième aspect de l'invention, une machine de fabrication de corps creux en verre comprenant au moins un moule de formage et un dispositif d'application de lubrifiant tel que présenté ci-dessus, la machine comprenant un mécanisme d'entraînement permettant au dispositif d'application de lubrifiant d'effectuer un déplacement en va et vient dans la direction axiale.

La canne ou lance de pulvérisation effectue un déplacement sensiblement vertical, axial, entre une position extrême haute et une position extrême basse. En position extrême haute, la canne est hors du moule et inactive. En position extrême basse, la canne est à une distance prédéterminée du fond de moule.

Le mécanisme d'entraînement peut être mécanique, de type galet roulant sur une came. Le mécanisme d'entraînement peut comprendre des moyens tels que des vérins. La canne peut être montée sur le bras d'un robot. Suivant le nombre de moules à lubrifier, plusieurs cannes peuvent être montées sur un même mécanisme d'entrainement.

Il est proposé, selon un troisième aspect, un procédé d'application de lubrifiant sur les surfaces internes d'un moule de formage de corps creux en verre, tels que des bouteilles, apte à appliquer le lubrifiant sur une partie des surfaces de formage d'un moule principal tel qu'un moule ébaucheur ou un moule finisseur, et sur les surfaces de formage d'un moule de fond situé dans une partie inférieure du moule principal tel qu'un moule de bague ou un moule de fond finisseur, le procédé comprenant le déplacement dans le moule d'une canne pourvue de premiers trous de pulvérisation et de deuxièmes trous de pulvérisation, un ou plusieurs trous parmi les premiers trous pulvérisant un lubrifiant dans une première direction radiale ou axiale, vers le moule ou vers le bas du moule, un ou plusieurs trous parmi les deuxièmes trous pulvérisant un lubrifiant dans une deuxième direction radiale, les premiers trous de pulvérisation et les deuxièmes trous de pulvérisation étant disposés en partie extrême inférieure de la canne. Avantageusement, la canne comprend deux réseaux de distribution de lubrifiant, un premier réseau reliant les premiers trous de pulvérisation à un premier réservoir de lubrifiant, un deuxième réseau reliant les deuxièmes trous de pulvérisation à un deuxième réservoir ou au premier réservoir de lubrifiant, des moyens de commande de chacun des deux réseaux de distribution étant aptes à assurer une alimentation simultanée ou une alimentation séquentielle des premiers trous de pulvérisation et des deuxième trous de pulvérisation.

D'autres objets et avantages de l'invention apparaîtront à la lumière de la description de modes de réalisation, faite ci-après en référence aux dessins annexés dans lesquels :
- la figure 1 est une vue en coupe d'un moule ébaucheur, une canne de graissage étant en position haute et effectuant une lubrification par pulvérisation radiale ;
- la figure 2 est une vue en coupe du moule ébaucheur de la figure 1, les deux demi-moules étant écartés, la canne de graissage étant en position basse et effectuant une lubrification par pulvérisation axiale ;
- la figure 3 est une vue en coupe d'un moule finisseur, une canne de graissage étant en position haute et effectuant une lubrification par pulvérisation radiale ;
- la figure 4 est une vue en coupe du moule finisseur de la figure 3, les deux demi-moules étant écartés, la canne de graissage étant en position basse et effectuant une lubrification par pulvérisation axiale.

Les positions haute et basse de la canne de graissage peuvent être fixées en fonction des besoins, et les exemples de positionnement représentés sur les figures ne sont pas limitatifs.

Dans la suite de cette description, l'expression canne de pulvérisation sera utilisée, afin de simplification, pour désigner la canne de graissage, qui pourrait également être dénommée lance de lubrification, lance de pulvérisation.

Par canne est désigné une pièce élancée, allongée, typiquement cylindrique et de faible diamètre, avantageusement de l'ordre de 8 mm. Par pulvérisation, on désigne ici la réduction en bruine d'un liquide (ou la réduction en particules très fines d'un mélange visqueux ou liquide contenant une poudre), ainsi que l'action de projeter ces particules très fines de liquide au moyen de pression.

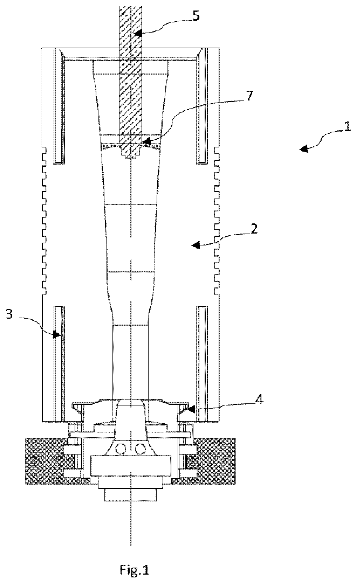

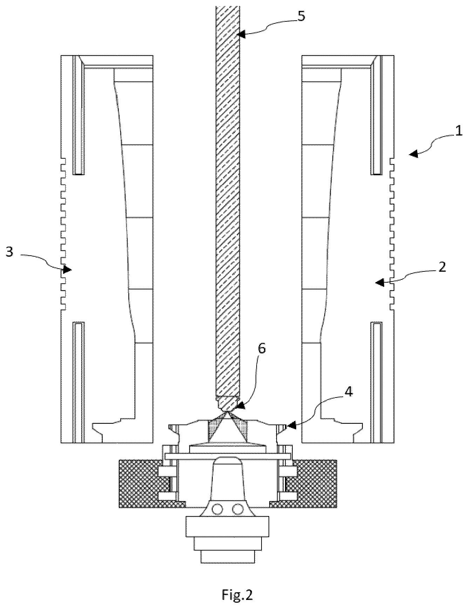

Sur les figures 1 et 2 est représenté schématiquement un moule ébaucheur 1 comprenant deux demi-moules 2, 3 et un moule de bague 4. En figure 1, le moule ébaucheur 1 est en position fermée, les deux demi-moules 2, 3 étant en contact. La canne de pulvérisation 5 est en position haute et effectue un graissage par pulvérisation radiale.

En figure 2, le moule ébaucheur 1 est en position ouverte, les deux-demi-moules 2, 3 étant écartés l'un de l'autre. La canne de pulvérisation 5 est en position basse et effectue un graissage par pulvérisation axiale du moule de bague 4.

La canne de pulvérisation 5 est pourvue de premiers trous de pulvérisation 6 et de deuxièmes trous de pulvérisation 7, un ou plusieurs trous parmi les premiers trous 6 pulvérisant un lubrifiant dans une première direction axiale, vers le bas du moule, un ou plusieurs trous parmi les deuxièmes trous 7 pulvérisant un lubrifiant dans une deuxième direction radiale.

Les premiers trous de pulvérisation 6 et les deuxièmes trous de pulvérisation 7 sont disposés en partie extrême inférieure de la canne de pulvérisation 5.

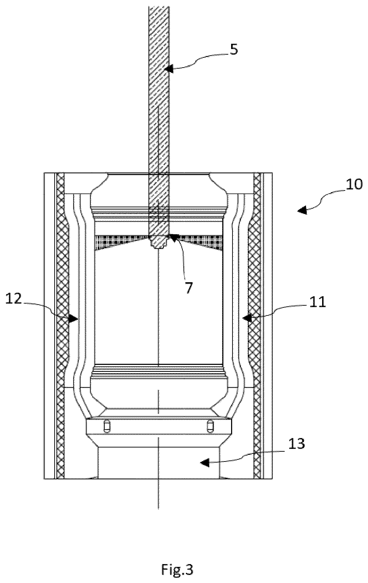

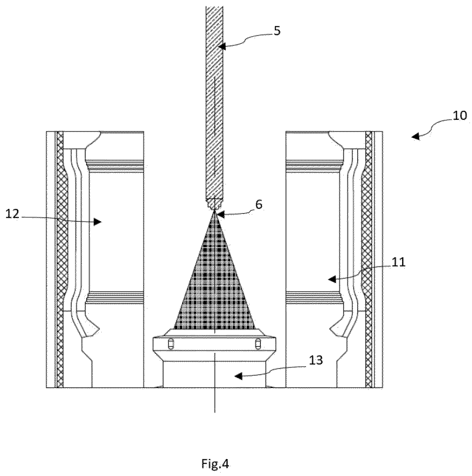

Sur les figures 3 et 4 est représenté un moule finisseur 10, comprenant deux demi-moules 11, 12 et un fond finisseur 13.

En figure 3, le moule finisseur 10 est en position fermée, les deux demi-moules 11, 12 étant en contact. La canne de pulvérisation 5 est en position haute et effectue un graissage par pulvérisation radiale, par les deuxièmes trous de pulvérisation 7.

En figure 4, le moule finisseur 10 est en position ouverte, les deux demi-moules 11, 12 étant écartés l'un de l'autre. La canne de pulvérisation 5 est en position basse et effectue un graissage par pulvérisation axiale, par les premiers trous de pulvérisation 6.

La pulvérisation est par exemple obtenue par injection d'air comprimé dans un flux de graisse pulvérisable, ou dans un flux de liquide tel qu'une huile.

La pulvérisation peut être obtenue par mise en place d'un rétrécissement de la section de passage d'un fluide, dans une buse.

Différentes formes de jets peuvent être obtenues : jets plats, cône plein, jet à cône creux et flux axial. Avantageusement, les jets sont variables, c'est-à-dire sujet à variations, en fonction du temps ou des besoins. L'angle des sorties de buse peut être ajusté, pour une adaptation à des formes de corps creux complexes.

Le dispositif présente de nombreux avantages.

Le graissage par pulvérisation axiale et le graissage par pulvérisation radiale peuvent être effectués de manière totalement simultanée, partiellement simultanée, ou de manière séquentielle et non simultanée. Par exemple, dans une première étape, la canne de pulvérisation pénètre dans le moule fermé pour un graissage par pulvérisation radiale, dans des zones prédéfinies des parois de moule. Lors de cette première étape, la canne de pulvérisation peut être maintenue en position ou déplacée, par exemple en descente dans le moule.

Puis, dans une deuxième étape, le moule est ouvert et les fonds de moule font l'objet d'une pulvérisation axiale, la partie extrême libre de la canne de pulvérisation étant rapprochée du fond de moule.

Le dispositif permet ainsi une grande flexibilité et variabilité d'usages, pour une adaptation à différentes géométries de corps creux à former. Des zones spécifiques des moules finisseurs peuvent être lubrifiées par pulvérisation, tandis que d'autres zones spécifiques peuvent être préservées d'une application de graisse ou d'huile, afin d'éviter une pollution sur les récipients formés.

Ainsi, par exemple, la zone de col (*neck*), la zone d'épaule (*shoulder*) et les zones gravées (*engravings*) sont avantageusement lubrifiées avec précision, par pulvérisation radiale. Les zones gravées contiennent des éléments de personnalisation des corps creux, ainsi que le numéro de moule.

La plaque de fond des moules finisseurs peut être lubrifiée de manière complète par une pulvérisation axiale.

## Revendications

1. Dispositif d'application de lubrifiant, sur les surfaces internes d'un moule de formage (1, 10) de corps creux en verre, tels que des bouteilles, le dispositif étant apte à appliquer le lubrifiant sur une partie des surfaces de formage d'un moule principal tel qu'un moule ébaucheur ou un moule finisseur, et sur les surfaces de formage d'un moule de fond situé dans une partie inférieure du moule principal tel qu'un moule de bague ou un moule de fond finisseur, le dispositif comprenant une canne (5) pourvue de premiers trous de pulvérisation (6) et de deuxièmes trous de pulvérisation (7), un ou plusieurs trous parmi les premiers trous (6) pulvérisant un lubrifiant dans une première direction radiale ou axiale, vers le moule ou vers le bas du moule (1, 10), un ou plusieurs trous parmi les deuxièmes trous (7) pulvérisant un lubrifiant dans une deuxième direction radiale, les premiers trous de pulvérisation (6) et les deuxièmes trous de pulvérisation (7) étant disposés en partie extrême inférieure de la canne (5), **caractérisé en ce que** la canne (5) comprend deux réseaux de distribution de lubrifiant, un premier réseau reliant les premiers trous de pulvérisation (6) à un premier réservoir de lubrifiant, un deuxième réseau reliant les deuxièmes trous de pulvérisation (7) à un deuxième réservoir de lubrifiant ou au premier réservoir de lubrifiant, le dispositif comprenant des moyens de commande de chacun des deux réseaux de distribution, les moyens de commande étant aptes à assurer une alimentation simultanée ou une alimentation séquentielle des premiers trous de pulvérisation (6) et des deuxièmes trous de pulvérisation (7).

2. Machine de fabrication de corps creux en verre comprenant au moins un moule de formage et un dispositif selon la revendication 1, et un mécanisme d'entraînement permettant au dispositif d'application de lubrifiant d'effectuer un déplacement en va et vient dans la direction axiale.

3. Procédé d'application de lubrifiant sur les surfaces internes d'un moule de formage (1, 10) de corps creux en verre, tels que des bouteilles, apte à appliquer le lubrifiant sur une partie des surfaces de formage d'un moule principal tel qu'un moule ébaucheur ou un moule finisseur, et sur les surfaces de formage d'un moule de fond situé dans une partie inférieure du moule principal tel qu'un moule de bague ou un moule de fond finisseur, le procédé comprenant le déplacement dans le moule d'une canne (5) pourvue de premiers trous de pulvérisation (6) et de deuxièmes trous de pulvérisation (7), un ou plusieurs trous parmi les premiers trous (6) pulvérisant un lubrifiant dans une première direction radiale ou axiale, vers le moule ou vers le bas du moule (1, 10), un ou plusieurs trous parmi les deuxièmes trous (7) pulvérisant un lubrifiant dans une deuxième direction radiale, les premiers trous de pulvérisation (6) et les deuxièmes trous de pulvérisation (7) étant disposés en partie extrême inférieure de la canne (5), **caractérisé en ce que** la canne (5) comprend deux réseaux de distribution de lubrifiant, un premier réseau reliant les premiers trous de pulvérisation (6) à un premier réservoir de lubrifiant, un deuxième réseau reliant les deuxièmes trous de pulvérisation (7) à un deuxième réservoir de lubrifiant ou au premier réservoir de lubrifiant, des moyens de commande de chacun des deux réseaux de distribution étant aptes à assurer une alimentation simultanée ou une alimentation séquentielle des premiers trous de pulvérisation (6) et des deuxième trous de pulvérisation (7).
